# EUROPEAN PATENT APPLICATION

(11) **EP 1 916 174 A2**
(43) Date of publication of application: **30.04.2008**
(21) Application number: 07014607.1
(22) Date of filing: 25.07.2007
(51) Int. Cl.: B62B 9/20, B62B 9/28

(54) **Wheeled tail platform for a stroller**

(30) Priority: 26.10.2006 CN 200620066817 U
(71) Applicant: Lerado (Zhong Shan) Industrial Co., Ltd., Zhong Shan City Guangdong (CN)
(72) Inventor: Yang, Cheng-Fan, Xue-Jia Tainan Hsien (TW); Cheng, Kuang-Neng, Dalin Town Chiayi County 622 (TW); Chou, Fu-Peng, Taichung City (TW)
(74) Representative: TER MEER - STEINMEISTER & PARTNER GbR

(57) **Abstract**

A wheeled tail platform (2) comprises a platform (21), a pair of connecting rods (22), a wheel assembly (23), and a pair of grab-handle armrests (141). The platform (21) has an indent (211) formed on its downside for positioning on a cross bar or a rear axle (120) of the stroller frame (10). The wheel assembly (23) is pivotally connected to the platform (21) for supporting the platform at rear end. The connecting rods (22) each has one end (221) pivoted to a pair of rear wheel struts (12) of the stroller frame respectively, and another end (225) pivoted with a front end of the platform, so as to allow the platform to pivot and collapse upward and close to the rear wheel struts. The pair of grab-handle armrests (141) is connected to a pair of handle bars (14) of the stroller respectively for grabbing by the occupant's hand during standing on for traveling around. Through the connecting and arrangement as being depicted, the wheeled tail platform (2) of the present invention is useable for making funs safely and collapsible with the stroller frame (10) conveniently.

## Description

### BACKGROUND OF THE INVENTION

### FIELD OF THE INVENTION

The present invention relates to a tail platform installed at rear side of baby stroller and in particular, to a wheeled tail platform which is retractable while the baby stroller is collapsed.

### DESCRIPTION OF THE RELATED ART

Traditional baby stroller generally facilitates only one occupant for outdoor transportation. However, in case there are twins or two children at same age who are needed to go outside with the parents together, there are two seats baby strollers being available now. The problem is, sometimes children are not willing to sit well-behaved in the stroller seats together as the adults wish.

For easing such a situation, some baby strollers as disclosed in U.S. Patent No. 5,622,375 and 6,086,087 are equipped with a tail platform that may help to solve the depicted problem, as the children may have a fun for standing on the tail platform in turn behind the stroller for traveling around.

As the tail platform of the prior art is connected to the frame and suspended in a length that may have a danger of causing the stroller to tip over rearwards. Further, the tail platform lacks of shock absorbing and retractable mechanism, this cause it can not be collapsible with the baby stroller in a relative compact form for saving storing space.

### SUMMARY OF THE INVENTION

In order to solve the drawbacks of the tail platform of the prior art, the present invention provides a wheeled tail platform that is collapsible with a collapsible baby stroller and may provide a shock absorbing element therein for ease an occupant while being standing thereon.

The wheeled tail platform according to the present invention may comprise a platform, a pair of connecting rods, a wheel assembly, and a pair of grab-handle armrests. The platform has an indent formed on its downside for positioning on a cross bar or a rear axle of the stroller frame. The wheel assembly is pivotally connected to the platform for supporting the platform at its rear end. The connecting rods each has one end pivoted to a pair of rear wheel struts of the stroller frame respectively, and another end pivoted with a front end of the platform, so as to allow the platform to pivot and collapse upward and close to the rear wheel struts. The pair of grab-handle armrests is connected to a pair of handle bars of the stroller respectively for grabbing by the occupant's hand during being standing on for traveling around. Through the connecting and arrangement as being depicted, the wheeled tail platform of the present invention is useable for making funs safely and collapsible with the stroller frame conveniently.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:

FIG. 1 is a perspective view of a wheeled tail platform embodying with a baby stroller frame according to the present invention.

FIG. 2 is an exploded side view showing the wheeled tail platform of the present invention.

FIG. 3 is a schematic view showing the wheeled tail platform in an unloaded state.

FIG. 4 is a schematic view showing the wheeled tail platform in a loaded state.

FIG. 5 is a schematic view showing a collapsing operation of the wheeled tail platform from an unloaded state.

FIG. 6 is a schematic view showing an occupant standing on the wheeled tail platform of the present invention can stayed evenly thereon, even through the stroller is tilted up which may caused by bumping on an obstacle or moving on a bumpy ground.

FIG. 7 is an alternative embodiment of the wheeled tail platform of the present invention.

FIG. 8 is an exploded side view of the wheeled tail platform of FIG.7.

FIG. 9 is a schematic view showing the wheeled tail platform of FIG.7 in a loaded state in which the wheel assembly absorbing shock energy by resiliently rotating rewards.

FIG. 10 is a schematic view showing the wheeled tail platform of FIG. 7 is collapsible by rotating the platform toward the rear wheel strut.

### DETAILED DESCRIPTION OF THE PREFERRED EMBODIMENTS

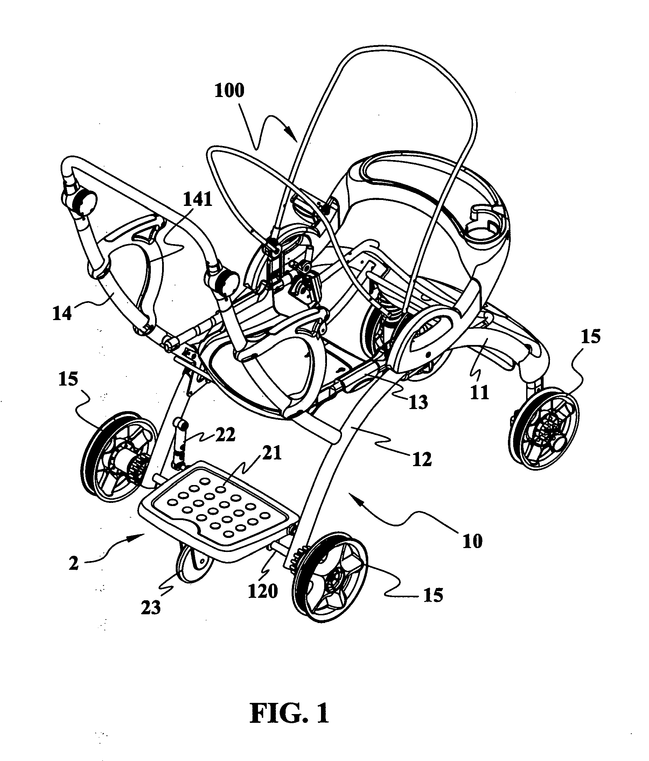

Referring to FIG. 1, a wheeled tail platform 2 according to the present invention is embodied with a stroller frame 10. The stroller frame 10 may comprise a pair of front wheel struts 11, a pair of rear wheel struts 12, a seat supporting rack 13 connected between the struts 11 and 12, a pair of handle bars 14 connected at rear end thereof, and a plurality of wheels 15 pivotally connected with the lower end of the wheel struts 11 and 12. Further, a first seat rack 100 is supported by the front portion of the seat supporting rack 13 for cover with fabrics and carrying and transporting a child or baby therein.

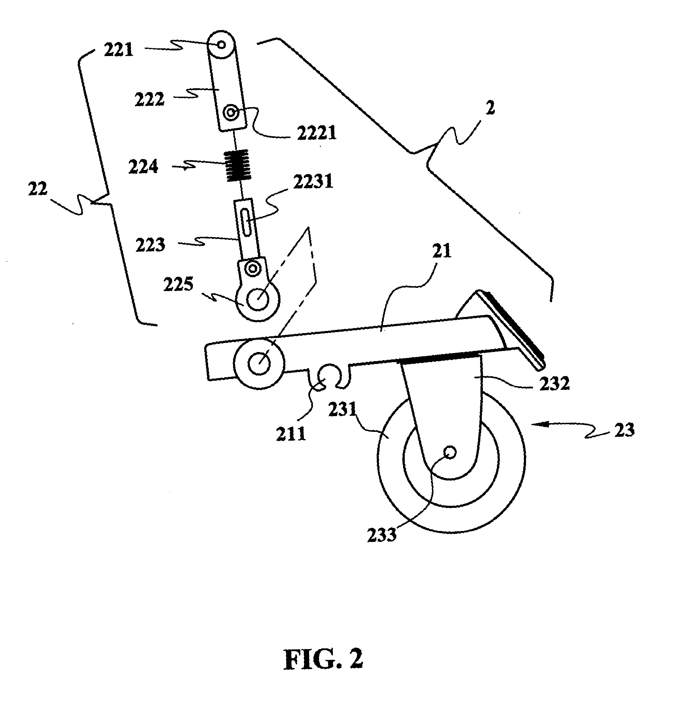

Referring to FIGS. 1 and 2, the embodiment of the wheeled tail platform 2 comprises a platform 21, a pair of connecting rods 22, a wheel assembly 23, and a pair of grab-handle armrests 141.

The platform 21 has an indent 211 formed between a pair of protrusions on its downside for positioning on a cross bar or a rear wheel axle 120 of the stroller frame 10. Preferably, the pair of protrusions may be a claw for detachably snapping on the cross bar or a rear wheel axle 120, this makes the platform 21 moving like a seesaw in using.

The wheel assembly 23 may include a wheel 231 and a wheel support bracket 232. The wheel support bracket 232 is pivotally connected to the platform 21 with a vertical shaft (not shown) so as to change the moving direction of the wheel 231 by freely rotation thereof. The wheel 231 is pivot with the wheel support bracket 232 by a horizontal shaft 233 so as to support the platform 21.

The connecting rods 22 may be a pair of retractable tube assemblies constructed of an inner tube 223 having a lower pivot point 225 and a long slot 2231, an outer tube 222 having an upper pivot point 221 and a pin hole 2221 for fixing a connecting pin (not shown) to pass through and move along the long slot 2231 so as to slidably connect the tubes 222 and 223, and a resilient element 224 installed for biasing between the tubes 222 and 223 for absorbing the impacts while the stroller being traveling on a bumpy ground.

Alternatively, the resilient element 224 can be embodied as a compression spring or a pneumatic compression element. Further, the connecting rods 22 can also be embodied as a pneumatic rod in stead of the retractable tube assemblies as being depicted above.

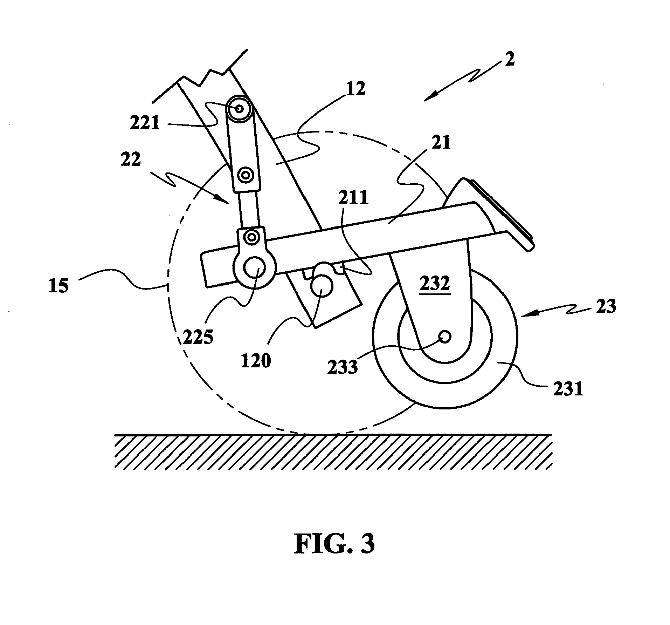

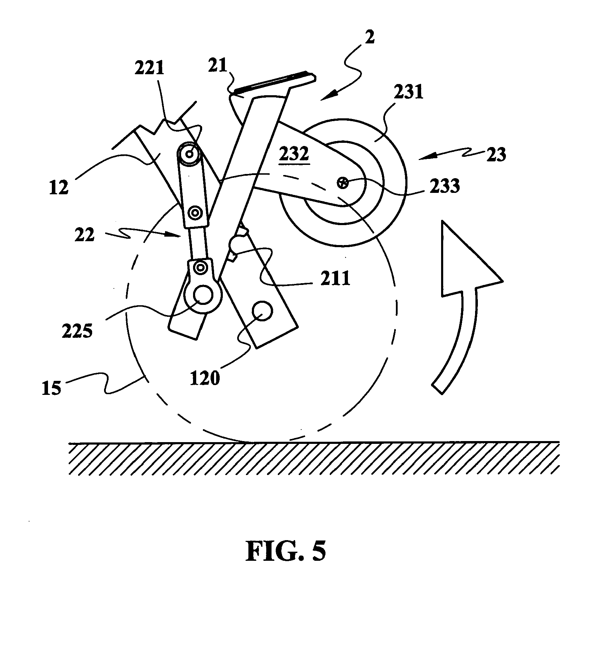

Referring to FIGS. 3 to 5, the upper pivot point 221 of the connecting rods 22 is pivoted with the pair of rear wheel struts 12, and the lower pivot point 225 is pivoted with the front end of the platform 21, so as to allow the platform 21 to pivot about the lower pivot point 225 of the connecting rods 22, and capable of rotating upwards to close to the rear wheel struts 12 while the stroller frame 10 is collapsing.

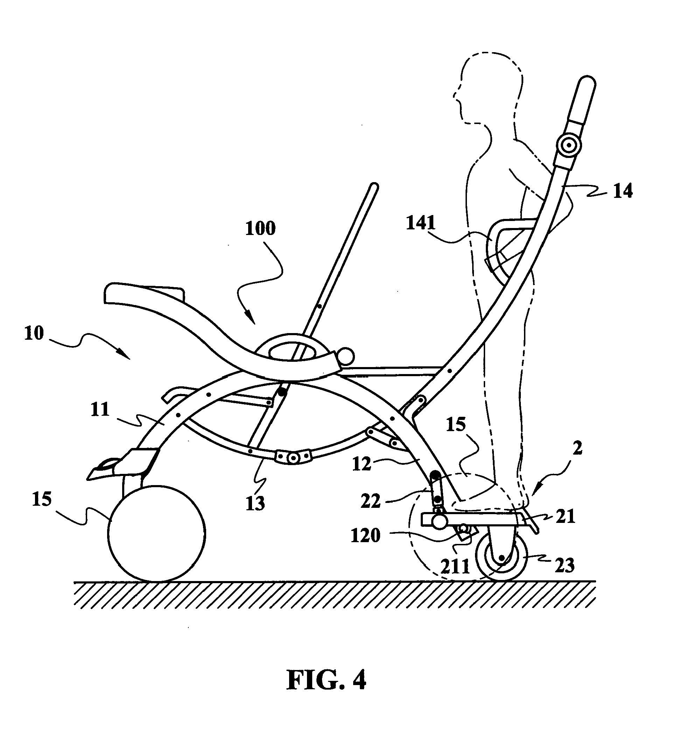

Referring to FIG. 4, a pair of grab-handle armrests 141 is connected to the pair of handle bars 14 in a convenient height for grabbing by the hands of the occupant while being standing on the platform 21 and traveling around with the wheeled tail platform 2.

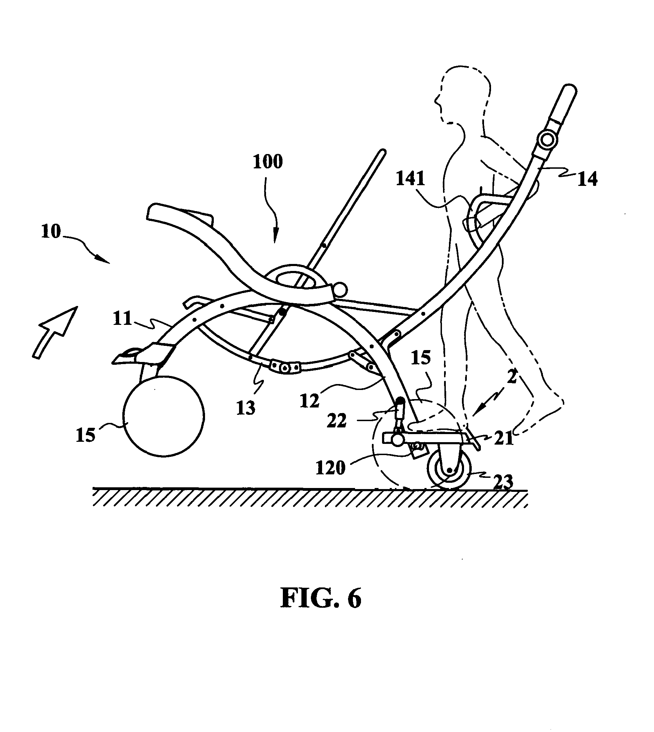

Referring to FIG. 6, the wheeled tail platform 2 of the present invention can kept evenly, even through the stroller frame 10 is tilted up while being bumped on an obstacle or moving on a bumpy ground.

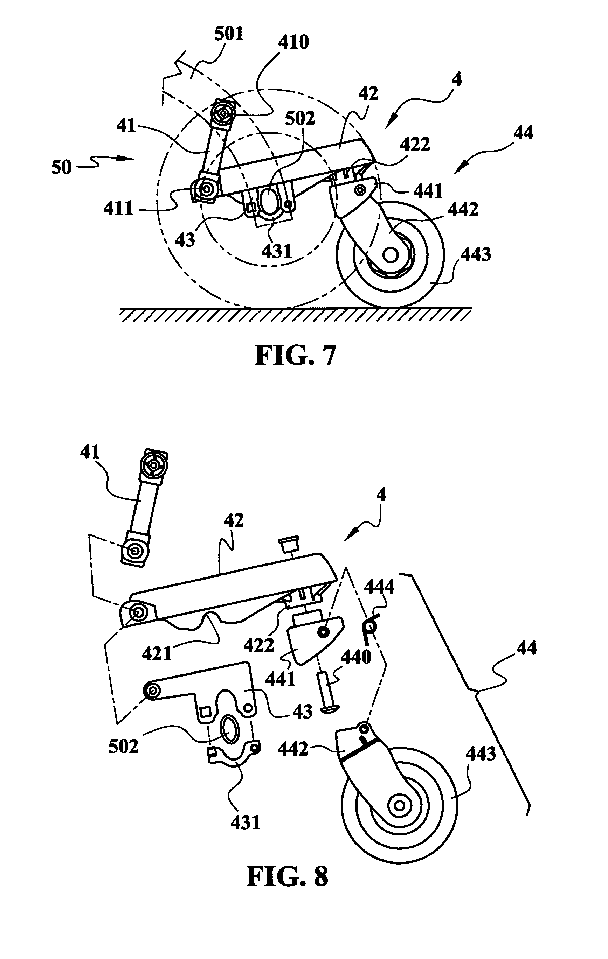

There is an alternative embodiment of the wheeled tail platform 4 for connecting with a pair of rear struts 501 of a baby stroller frame 50 as shown in FIGS. 7 to 10, includes a pair of connecting rods 41, a platform 42, a shock absorbing wheel assembly 44 and a pivoting bracket 43.

Referring to FIGS. 7 and 8, the connecting rods 41 each has an upper pivot point 410 for pivotally connecting to the rear wheel struts 501 and a lower pivot point 411 for pivotally connecting to the front end of the platform 42 thereby to allow the platform 42 to rotate about the lower pivot point 411.

To provide a more stable positioning of the lower pivot point 411 and strengthening the structure thereof, a pivoting bracket 43 is provided between the lower pivot point 411 and the rear wheel struts 501 for forming a delta connection. The pivoting bracket 43 has one end pivotally connected with the lower pivot point 411, and another end firmly connected with the rear wheel axle 502 by a holding piece 431.

The platform 42 has an indent 421 formed on the underside thereof and a swirling base 422 for connecting the shock absorbing wheel assembly 44. The indent 421 is design to engage with and position on the rear wheel axle 502 for supporting the body weight of the occupant.

The shock absorbing wheel assembly 44 is an alternative embodiment of the wheel assembly shown in FIG. 2, wherein the wheel support bracket 232 can be embodied as assembly consists of a connecting element 440, a first joint element 441, a second joint element 442, and a resilient element 444 installed for biasing therebetween.

The first joint element 441 has an upper end pivotally connected at the swirling base 422 by a connecting element 440, and lower end rotatally connected with the second joint element 442. A resilient element 444 is connected between the joint elements 441 and 442 for absorbing the shocks coming from the wheel 443 which is connected at the lower end of the second joint element 442.

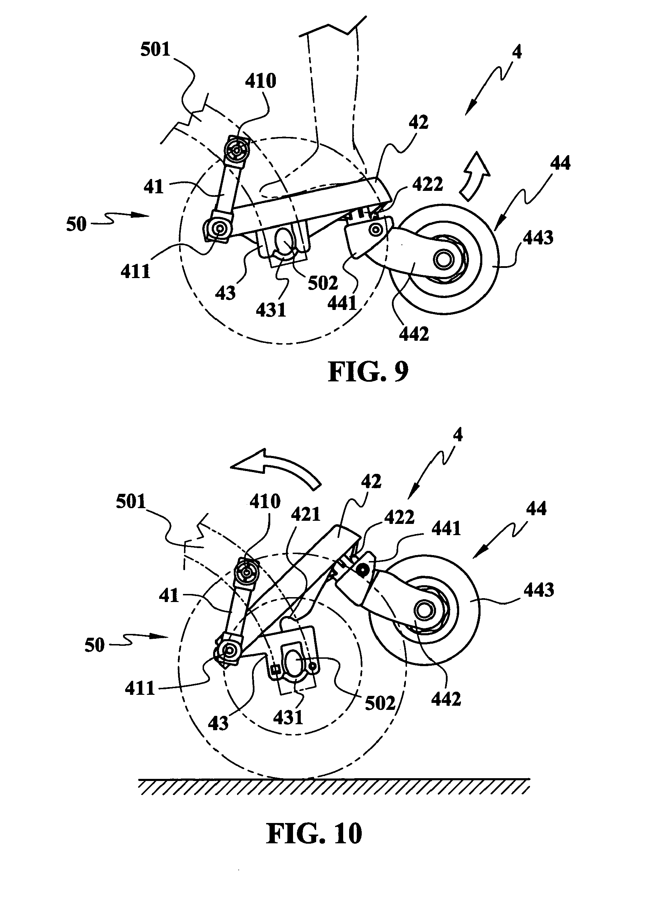

As shown in FIG. 9, when the wheel 443 is bumped by moving on a bumpy ground, the resilient element 444 is used to absorb the shock by transferring the energy to rotate the second joint element 442 rearwards until the shock energy being exhausted at last.

As shown in FIG. 10, when the wheeled tail platform 4 is collapsing with the baby stroller frame 50, the platform 42 can be rotate upwardly and close to the rear wheel strut 501 in a relative compact form.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A wheeled tail platform for a stroller, the stroller having a stroller frame comprising a pair of front wheel struts, a pair of rear wheel struts, a seat supporting rack pivotally connected between the front wheel struts and the rear wheel struts, a pair of handle bars pivotally connected with the rear struts, a plurality of wheels connected with the front wheel struts and the rear wheel struts, and cross bar connected between rear struts; the wheeled tail platform comprising:
a platform, having a front end and a rear end, and an indent formed on an underside thereof for positioning on the cross bar;
a pair of connecting rods, each having an upper pivot point pivotally connected with the rear wheel struts respectively, and a lower pivot point pivotally connected with the front end of the platform;
a wheel assembly, having a wheel support bracket pivotally connected with the platform, and wheel pivotally connected with the wheel support bracket; and
a pair of grab-handle armrests connected with the handle bars for grabbing by an occupant standing on the platform.

2. The wheeled tail platform of claim 1, wherein the connecting rods are a pair of retractable tubes, each having an outer tube, an inner tube, a resilient element biasing therebetween, and a connecting pin used for slidably connecting the inner tube with the outer tube.

3. The wheeled tail platform of claim 2, wherein the outer tube has a pin hole for fix the connecting pin, and the inner tube has a long slot for slidably receiving the connecting pin therein.

4. The wheeled tail platform of claim 1, wherein the resilient element is a compression spring.

5. The wheeled tail platform of claim 1, wherein the resilient element is a pneumatic compression element.

6. The wheeled tail platform of claim 1, wherein the pair of connecting rods are a pair of pneumatic rods.

7. The wheeled tail platform of claim 1, wherein the cross bar is a rear wheel axle connected between the rear wheel struts.

8. The wheeled tail platform of claim 1, wherein the indent is formed between a pair of protrusions on the downside of the platform.

9. The wheeled tail platform of claim 1, wherein the wheel support bracket comprises:
a first joint element, pivotally connected with the platform by a connecting element;
a second joint element pivotally connected with the first joint element; and
a resilient element installed for biasing between the first joint element and the second j oint element.

10. The wheeled tail platform of claim 9, wherein the platform has a swirling base for pivotally connecting with the first joint element.

11. The wheeled tail platform of claim 9, wherein a pivoting bracket has one end for connecting with the lower pivot point of the connecting rods, and another end connected with the cross bar.

12. The wheeled tail platform of claim 11, wherein the cross bar is a rear wheel axle of the stroller frame.

13. The wheeled tail platform of claim 11, wherein the pivoting bracket is firmly connected with the rear wheel axle by a holding piece.

14. The wheeled tail platform of claim 11, wherein the pivoting bracket is provided between the lower pivot point of the connecting rods and the rear wheel axles and formed a delta connection.
